# EUROPEAN PATENT APPLICATION

(11) **EP 4 764 762 A1**
(43) Date of publication of application: **24.06.2026**
(21) Application number: 25223625.2
(22) Date of filing: 16.12.2025
(51) Int. Cl.: G05D 1/243, G05D 1/246, G05D 1/633

(54) **MOVABLE BODY CONTROL APPARATUS, MOVABLE BODY CONTROL METHOD, AND STORAGE MEDIUM**

(30) Priority: 20.12.2024 JP 2024224704
(71) Applicant: HONDA MOTOR CO., LTD., Tokyo 105-8404 (JP)
(72) Inventor: HASEGAWA, Takahiko, Wako-shi, Saitama, 351-0193 (JP); MATSUZAKI, Sango, Wako-shi, Saitama, 351-0193 (JP)
(74) Representative: Kiwit, Benedikt

(57) **Abstract**

A movable body control apparatus includes: an acquisition portion that acquires an image in which a situation around a movable body is captured; a recognition portion that recognizes an object which is present around the movable body based on the image; a self-position estimation portion that estimates a self-position of the movable body based on the image; a movement control portion that performs a movement control of the movable body based on an estimation result of the self-position; and an information process portion that extracts, from the image, a first image which satisfies a predetermined condition of updating map information, and stores the first image in a storage portion, wherein the predetermined condition is a condition of extracting the image in which at least a first category object whose position is indicated in the map information is included, and the information process portion determines the first category object from the recognized object that is present around the movable body and extracts the first image in which the determined first category object is captured.

## Description

### BACKGROUND

### Field of the Invention

The present invention relates to a movable body control apparatus, a movable body control system, a movable body control method, and a storage medium.

### Background

In recent years, efforts to provide access to sustainable transport systems have been increasing in consideration of vulnerable people among traffic participants. In order to realize this, research and development has been focused on which further improves the safety and convenience of transport through research and development on an automatic driving technique.

In the related art, a movable body that moves together with a user while maintaining a preset fixed relative position relationship such as a forward position or a rearward position of the user has been put to practical use. In such a movable body, in order to lead (guide) or follow the user to a destination safely, it is necessary to accurately understand (estimate) a current position (self-position) in accordance with the situation of a movement route on which the user and the movable body itself will move in the future.

In relation to this, in the related art, a technique is disclosed which performs self-position estimation of a movable body based on a result of comparing a plurality of captured images in which a predetermined direction is captured at a different position with a reference image that is captured in advance (for example, refer to PCT International Publication No. WO 2019/073795). Further, in the related art, a technique is disclosed which relates to a plurality of position estimation portions that perform estimation relating to a position of a movable body by using information acquired by a sensor portion and acquire a reliability degree relating to the estimation result, and a self-position estimation device that acquires a self-position of the movable body in accordance with an estimation result corresponding to the highest reliability degree among a plurality of reliability degrees acquired by the plurality of position estimation portions (for example, refer to Japanese Unexamined Patent Application, First Publication No. 2021-018638).

### SUMMARY

In the automatic driving technique, the self-position is estimated by using map information indicating the situation around the movement route of the movable body, which is determined and generated in advance. However, since the environment around the movement route of the movable body changes every moment, it is necessary to update the map information in accordance with the change of the environment, and it is a problem that the load of a process of updating this map information is large. Further, it is difficult for the movable body itself to perform the update of the map information. This is because although the movable body moves while recognizing an object (for example, a fixed structure or other traffic participants such as pedestrians (persons)) that is present in the vicinity, the recognition of the object is performed by assuming that the map information generated in advance is correct, and therefore, when the recognized object is different from a state indicated in the map information, it is difficult for the movable body itself during moving to determine whether the certainty (that is, the reliability degree) of the recognized object is low or whether the environment of the movement route is changed. This is because if the movable body itself performs the update of the map information during moving, the movable body moves based on an uncertain surrounding environment, and it is conceivable that it becomes impossible to safely lead (guide) or follow the user to the destination. Therefore, even in the technique of the related art, it is not disclosed that the movable body itself performs the update of the map information. Therefore, in the related art, the map information is updated before the movable body actually moves, and the daily change of the environment of the movement route is coped with. For example, a method of acquiring the latest data of the environment of the movement route by moving a device (for example, a wagon or the like) having a similar configuration to a sensor for object recognition included in the movable body before the movable body actually moves, and updating the map information based on the acquired data or the like is used.

An aspect of the present invention aims at providing a movable body control apparatus, a movable body control system, a movable body control method, and a storage medium capable of further suitably updating map information for a movable body to perform estimation of a self-position. That is, the aspect of the present invention aims at reducing the load of a process of updating the map information for estimating the self-position in response to the change of the environment of a movement route of the movable body in consideration of the positions of an object or other traffic participants included in an image in which the vicinity of the movable body is captured, and achieving that the self-position is further suitably estimated. Further, the aspect of the present invention contributes to the development of sustainable transport systems.

A movable body control apparatus according to a first aspect of the present invention includes: an acquisition portion that acquires an image in which a situation around a movable body is captured; a recognition portion that recognizes an object which is present around the movable body based on the image; a self-position estimation portion that estimates a self-position of the movable body based on the image; a movement control portion that performs a movement control of the movable body based on an estimation result of the self-position; and an information process portion that extracts, from the image, a first image which satisfies a predetermined condition of updating map information used for estimation of a self-position when the movable body moves, and stores the first image in a storage portion, wherein the predetermined condition is a condition of extracting the image in which at least a first category object whose position is indicated in the map information is included, and the information process portion determines the first category object from the recognized object that is present around the movable body and extracts the first image in which the determined first category object is captured.

A second aspect is the movable body control apparatus according to the first aspect described above, wherein the first category object may be an object that is movable but is continuously present at an identical position at present.

A third aspect is the movable body control apparatus according to the first or second aspect described above, wherein the predetermined condition may be a condition of extracting the image in which at least a specific region whose position is indicated in the map information is captured, and the information process portion may extract, from the image, the first image in which the specific region is captured.

A fourth aspect is the movable body control apparatus according to the third aspect described above, wherein the specific region may be a region indicated in the map information.

A fifth aspect is the movable body control apparatus according to the fourth aspect described above, wherein the specific region may be a region in which a number of a second category object which is a dynamic object captured in the image is large.

A movable body control system according to a sixth aspect of the present invention includes: a movable body; and an information provision device, wherein the movable body includes: an acquisition portion that acquires an image in which a situation around the movable body is captured; a recognition portion that recognizes an object which is present around the movable body based on the image; a self-position estimation portion that estimates a self-position of the movable body based on the image; a movement control portion that performs a movement control of the movable body based on an estimation result of the self-position; and an information process portion that extracts, from the image, a first image which satisfies a predetermined condition of updating map information used for estimation of a self-position when the movable body moves, and stores the first image in a storage portion, wherein the predetermined condition is a condition of extracting the image in which at least a first category object whose position is indicated in the map information is included, the information process portion determines the first category object from the recognized object that is present around the movable body, extracts the first image in which the determined first category object is captured, and transmits the first image stored in the storage portion to the information provision device by a communication portion, and the information provision device provides at least the map information to the movable body and updates the map information based on the first image transmitted by the movable body.

A movable body control method according to a seventh aspect of the present invention includes, by way of a computer: acquiring an image in which a situation around a movable body is captured; recognizing an object which is present around the movable body based on the image; estimating a self-position of the movable body based on the image; performing a movement control of the movable body based on an estimation result of the self-position; extracting, from the image, a first image which satisfies a predetermined condition of updating map information used for estimation of a self-position when the movable body moves; and storing the first image in a storage portion, wherein the predetermined condition is a condition of extracting the image in which at least a first category object whose position is indicated in the map information is included, and when extracting the first image, the first category object is determined from the recognized object that is present around the movable body, and the first image in which the determined first category object is captured is extracted.

An eighth aspect of the present invention is a storage medium storing a program that causes a computer to: acquire an image in which a situation around a movable body is captured; recognize an object which is present around the movable body based on the image; estimate a self-position of the movable body based on the image; perform a movement control of the movable body based on an estimation result of the self-position; extract, from the image, a first image which satisfies a predetermined condition of updating map information used for estimation of a self-position when the movable body moves; and store the first image in a storage portion, wherein the predetermined condition is a condition of extracting the image in which at least a first category object whose position is indicated in the map information is included, and when extracting the first image, the program causes the computer to determine the first category object from the recognized object that is present around the movable body and to extract the first image in which the determined first category object is captured.

According to the first to eighth aspects described above, it is possible to further suitably update the map information for the movable body to perform estimation of the self-position in accordance with the change of the environment of the movement route of the movable body.

### BRIEF DESCRIPTION OF THE DRAWINGS

FIG. 1 is a view showing an example of the configuration of a movable body control system including a movable body according to an embodiment.
FIG. 2 is a perspective view showing an example of an exterior structure of the movable body according to the embodiment.
FIG. 3 is a view showing an example of a functional configuration of the movable body according to the embodiment.
FIG. 4 is a view showing an example of map information representing a region in which the movable body moves and a movement route of the movable body according to the embodiment.
FIG. 5 is a view showing an example of extracting a camera image in a movable body control apparatus according to the embodiment.
FIG. 6 is a view showing an example of map information updated based on a camera image extracted in the movable body control apparatus according to the embodiment.
FIG. 7 is a flowchart showing an example of a flow of a process of extracting a camera image performed in the movable body control apparatus according to the embodiment.

### DESCRIPTION OF THE REFERENCE NUMERALS

- 1: Movable body control system
- 2: Terminal device
- 10: Management device
- 20: Information provision device
- 100: Movable body
- 110: Base body
- 112: Door portion
- 120: First wheel
- 122: First motor
- 130: Second wheel
- 132: Second motor
- 134: Battery
- 136: Brake device
- 138: Steering device
- 140: Third wheel
- 150: Support body
- 180: Camera
- 190: Communication portion
- 200: Control apparatus
- 202: Acquisition portion
- 204: Recognition portion
- 206: Self-position estimation portion
- 208: Trajectory generation portion
- 210: Movement control portion
- 212: Information process portion
- 220: Storage portion
- 222: Control information
- 224: Map information
- NW: Network

### DESCRIPTION OF EMBODIMENTS

Hereinafter, an embodiment of a movable body control apparatus, a movable body control system, a movable body control method, and a storage medium of the present invention will be described with reference to the drawings.

### [Configuration of movable body control system]

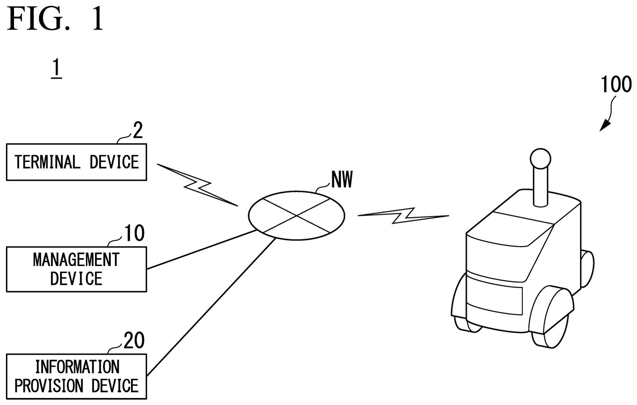

FIG. 1 is a view showing an example of the configuration of a movable body control system including a movable body according to an embodiment. The movable body control system 1 includes, for example, a terminal device 2, a management device 10, an information provision device 20, and a movable body 100. These components perform communication via a network NW or the like. The network NW is, for example, an arbitrary network such as a LAN (Local Area Network), a WAN (Wide Area Network), or an Internet line.

### [Terminal device]

The terminal device 2 is, for example, a computer device such as a smartphone or a tablet terminal. The terminal device 2 is used by a user who uses the movable body control system 1, and requests the use of the movable body 100 to the management device 10 based on an operation of the user, or acquires information indicating that the use of the movable body 100 is permitted from the management device 10.

### [Management device]

The management device 10 manages a use situation, a use reservation, and the like of the movable body 100 in the movable body control system 1. In response to a request acquired from the terminal device 2, the management device 10 sets a use authority to a movable body 100 that the user can use, transmits information indicating that the use of the set movable body 100 is permitted to the terminal device 2, and provides the user with the information. The management device 10 generates and manages schedule information in which, for example, identification information of a user registered in advance and the date and time of the use reservation of the movable body 100 are associated with each other.

### [Information provision device]

The information provision device 20 provides the movable body 100 and the terminal device 2 with a position at which the movable body 100 is present, a region in which the movable body 100 moves, map information of the vicinity of the region, and the like. The information provision device 20 may generate a route from the current position of the movable body 100 to a destination and provide the generated route to the movable body 100 in response to a request from the movable body 100. The management device 10 and the information provision device 20 may be realized by, for example, a server device or the like, or may be a device configured by cloud computing constituted of one or more information processing devices.

### [Movable body]

The movable body 100 is, for example, a movable body that can perform autonomous movement. The autonomous movement means that the movable body 100 is moved by performing one or both of a speed control and a turn control of the movable body 100 without depending on a driving operation by the user. The turn control includes, for example, changing of the direction of the movable body 100 by rotation or turn, and a steering control in the case where a steering wheel is provided. The movable body 100 is, for example, a vehicle but may include other movable bodies (for example, a walking robot or the like) that can perform autonomous movement. The vehicle includes not only a four wheeled vehicle but also all vehicles that can move with three wheels, two wheels, or the like. The movable body 100 has, for example, a structure on which an object such as a baggage can be placed and which can transport the object. The object described above may include a person such as a user. The movable body 100 may be a device that can travel on a roadway or in a predetermined region (for example, a walkway, an inside of a building, a public open space, or the like) that is different from the roadway.

The movable body 100 is used by the user, for example, based on the use authority set by the management device 10. For example, the user places the baggage or the like on the movable body 100 and causes the movable body 100 to follow the user in response to the movement of the user, lead the user to a destination, or travel parallel to the user, in accordance with a movement mode commanded by the user. Position information, a use situation, a use reservation situation, and the like of the movable body 100 are managed by the management device 10. The movable body 100 acquires information from the management device 10 and the information provision device 20 and performs a movement control based on the use authority and the provided information.

In FIG. 1, a configuration of the movable body control system 1 including one terminal device 2, one management device 10, one information provision device 20, and one movable body 100 is shown, but the movable body control system 1 of the embodiment may have at least one of a plurality of terminal devices 2, a plurality of management devices 10, a plurality of information provision devices 20, and a plurality of movable bodies 100. In the movable body control system 1 of the embodiment, the management device 10 and the information provision device 20 may be integrated. The movable body control system 1 may have a configuration that does not have the management device 10. In this case, at least part of the functions of the management device 10 is provided on the movable body 100, and by the terminal device 2 communicating with the movable body 100 via the network NW, the management of the use authority and the like is performed.

### [Exterior configuration of movable body]

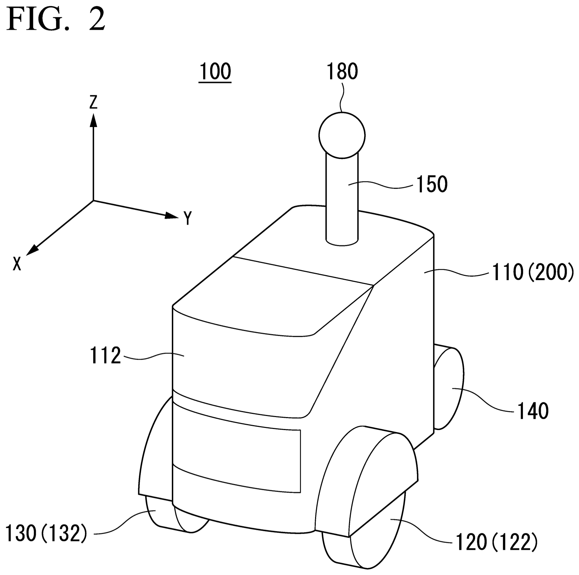

FIG. 2 is a perspective view showing an example of an exterior structure of the movable body 100 according to the embodiment. In the following description, a forward direction of the movable body 100 is defined as a plus X direction, a rearward direction of the movable body 100 is defined as a minus X direction, a left direction with reference to the plus X direction which is a width direction of the movable body 100 is defined as a plus Y direction, a right direction is defined as a minus Y direction, and a height direction of the movable body 100 which is a direction orthogonal to the X direction and the Y direction is defined as a plus Z direction.

The movable body 100 includes, for example, a base body 110, a door portion 112 that is provided on the base body 110, and a wheel (a first wheel 120, a second wheel 130, and a third wheel 140) that is assembled to the base body 110. For example, the user can open the door portion 112 that is openable and closable and can put baggage in a storage portion provided on the base body 110 or take the baggage from the storage portion. The first wheel 120 and the second wheel 130 are a drive wheel and are rotated by power from a motor or the like. The third wheel 140 is an auxiliary wheel (driven wheel). The movable body 100 may be movable by using a configuration other than the wheel such as an endless track.

A support body 150 having a cylindrical shape and extending in the plus Z direction is provided on a surface in the plus Z direction of the base body 110. A camera 180 that captures an image around the movable body 100 is provided on an end portion in the plus Z direction of the support body 150.

The camera 180 is, for example, a digital camera using a solid-state imaging element such as a CCD (Charge Coupled Device) or a CMOS (Complementary Metal Oxide Semiconductor). The position where the camera 180 is provided may be an arbitrary position that is different from the position described above. The camera 180 periodically and repeatedly captures an image of the vicinity (at least the front) of the movable body 100, for example, at a predetermined time interval. The camera 180 may be, for example, a stereo camera or a camera capable of capturing an image of the vicinity of the movable body 100 at a wide angle (for example, at 360 degrees). The camera 180 may be constituted of, for example, a plurality of cameras that captures images of the front, the rear, and the side of the movable body 100, respectively, and may capture an image around the movable body 100 at a wide angle. The camera 180 may be realized, for example, by combining a plurality of 120-degree cameras or a plurality of 60-degree cameras.

The configuration of the movable body 100 shown in FIG. 2 is merely an example, and other configurations may be provided, some configurations (for example, some configurations that are not essential for realizing the function of the present invention such as the door portion 112) may be omitted, or still other configurations may be added. For example, in order to detect an object that is present in the vicinity of the movable body 100, a detection device (sensor) that is different from the camera 180 such as a radar device or a LIDAR (Light Detection and Ranging) may be provided on the movable body 100. Further, the size, the shape, the arrangement position, and the like of each configuration in the movable body 100 shown in FIG. 2 are not also limited to those of the example shown in FIG. 2.

### [Functional configuration of movable body]

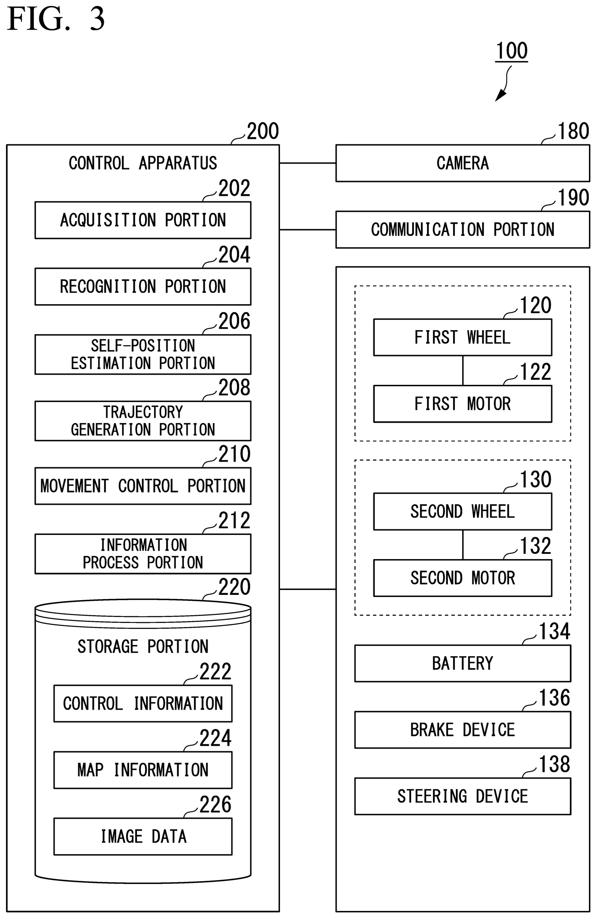

FIG. 3 is a view showing an example of a functional configuration of the movable body 100 according to the embodiment. The movable body 100 includes, for example, a first motor 122, a second motor 132, a battery 134, a brake device 136, a steering device 138, a communication portion 190, and a control apparatus 200 in addition to the configuration shown in FIG. 2. The first motor 122 and the second motor 132 are operated by electric power supplied from the battery 134. The first motor 122 drives the first wheel 120. The first motor 122 may be an in-wheel motor provided on a wheel of the first wheel 120. The second motor 132 drives the second wheel 130. The second motor 132 may be an in-wheel motor provided on a wheel of the second wheel 130.

The brake device 136 outputs a brake torque to each wheel based on a command of the control apparatus 200. The steering device 138 includes an electric motor. The electric motor changes the direction of the first wheel 120 or the second wheel 130 by applying a force to a rack-and-pinion mechanism, for example, based on a command of the control apparatus 200 and changes the course of the movable body 100.

The communication portion 190 is a communication interface for communicating with the terminal device 2, the management device 10, and/or the information provision device 20 via the network NW, and transmitting and receiving various information. The communication portion 190 includes, for example, a network card, a NIC (Network Interface Controller), and the like. The communication portion 190 may communicate with another movable body.

The control apparatus 200 controls the overall operation of the movable body 100. The control apparatus 200 is stored within the base body 110. The control apparatus 200 includes, for example, an acquisition portion 202, a recognition portion 204, a self-position estimation portion 206, a trajectory generation portion 208, a movement control portion 210, an information process portion 212, and a storage portion 220.

Each of the acquisition portion 202, the recognition portion 204, the self-position estimation portion 206, the trajectory generation portion 208, the movement control portion 210, and the information process portion 212 is realized, for example, by a hardware processor such as a CPU (Central Processing Unit) executing a program (software). Some or all of these components may be realized by hardware (a circuit portion including circuitry) such as an LSI (Large Scale Integration), a SOC (System On Chip), an ASIC (Application Specific Integrated Circuit), a programmable logic device (for example, a SPLD (Simple Programmable Logic Device), a CPLD (Complex Programmable Logic Device), or a FPGA (Field Programmable Gate Array)), or a GPU (Graphics Processing Unit), or may be realized by cooperation of software and hardware. Some or all of these components may be realized by a dedicated LSI. The program may be stored, for example, in advance in a storage device (a storage device including a non-transitory storage medium) such as a semiconductor memory element such as a ROM (Read Only Memory), a RAM (Random Access Memory), or a flash memory or a HDD (Hard Disk Drive), or may be stored in a removable storage medium (non-transitory storage medium) such as a DVD or a CD-ROM and be installed in the storage device by attaching the storage medium to a drive device. Some or all of the functional configurations included in the control apparatus 200 may be included in another device. For example, another device (a server device or the like) and the movable body 100 may communicate with each other and cooperate to control the movable body 100.

Some or all of the functions of each component of the acquisition portion 202, the recognition portion 204, the self-position estimation portion 206, the trajectory generation portion 208, and the information process portion 212 may be realized, for example, by a server device or the like, and may perform a control equivalent to that of the control apparatus 200 by communicating with the communication portion 190 of the movable body 100 via the network NW.

The storage portion 220 is realized, for example, by a semiconductor memory element such as a ROM, a RAM, or a flash memory or a storage device (a storage device including a non-transitory storage medium) such as a hard disk drive (HDD). Control information 222 including a control program for controlling an operation (for example, an operation by a movement mode) of the movable body 100, which is referred to by the movement control portion 210, map information 224, and image data 226 including a camera image extracted by the information process portion 212 are stored in the storage portion 220.

The map information 224 is, for example, map information of a position at which the movable body 100 is present, a region in which the movable body 100 moves, the vicinity of the region, and the like, which is provided by the information provision device 20. The map information 224 may include information of the location of a store, a floor map of a facility such as a shopping center, an art museum, or a museum, or the like in association with position information (for example, the latitude and the longitude) on the map. The map information 224 may include detailed map information including a width (road width), a slope, a curvature, and the like of a road and a passage. The map information 224 may include information relating to a feature point corresponding to a road shape, an edge portion of a structure (an object of a static obstacle) installed in the vicinity, or the like. The map information 224 can be created, from an original image for creating the map information 224, by leaving only a static object such as a structure which is always captured in an image captured by the camera 180 provided on the movable body 100 and can be used for extraction of a feature point, and deleting a dynamic object such as another traffic participant which is not always captured in the image captured by the camera 180 due to the movement of the dynamic object and cannot be used for extraction of a feature point. The map information 224 with high accuracy can be created, for example, by the creator of the map information 224 discriminating a static object to be left in the map information 224 from a dynamic object to be deleted from the map information 224 and manually (by hand working or the like) deleting the dynamic object. The map information 224 may be obtained by discriminating and deleting a dynamic object to be deleted from the map information 224, for example, by using a learned model that is learned to discriminate a dynamic object from a static object.

Feature information of a user, feature information (for example, feature information based on a shape, a size, a color, and the like) of a specific object, and information indicating a correspondence relationship between a motion (gesture) of a user and an operation control of the movable body 100 may be stored in the storage portion 220. At least part of the information stored in the storage portion 220 may be updated as needed by the communication portion 190 communicating with another device such as the management device 10 or the information provision device 20.

The acquisition portion 202 acquires a detection result of the camera 180 in which an image of the situation around the movable body 100 is captured. For example, the acquisition portion 202 acquires an image (hereinafter, referred to as a "camera image") captured by the camera 180.

The acquisition portion 202 acquires information obtained by the communication portion 190 or an operation portion (not shown). The acquisition portion 202 acquires information relating to a movement mode designated by the user, for example, by the operation portion (not shown). The operation portion receives an input operation by the user. The operation portion includes, for example, at least one of a touch panel, a switch, a key, and the like. The operation portion may have a voice input section (a microphone or the like) that receives an input operation of the user by a voice input or receives the voice of a person in the vicinity. The movement mode includes at least a follow mode of moving and following the user, a lead mode of moving and leading the user toward a destination, a parallel travel mode of moving beside the user, and the like. The movement mode may include a standby mode of retreating (standing by) to a position designated by the user, an emergency mode of performing a specific control at the time of emergency of the user, and the like.

The camera image is an example of an "image".

The recognition portion 204 recognizes a situation around the movable body 100, for example, based on a camera image captured by the camera 180. The recognition portion 204 recognizes, for example, an object that is present around the movable body 100, a state of the object such as a position (a distance from the movable body 100 and an orientation with respect to a movement direction (plus X direction) of the movable body 100), a movement speed, and an acceleration, a category of the object, and the like. The object includes, for example, some of all of other traffic participants such as a vehicle, a bicycle, or a pedestrian (person), an obstacle such as a fallen object that is present (has fallen) on a movement route along which the movable body 100 moves such as a passage in a facility or an outside road, and a structure arranged (installed) on the movement route. The category is, for example, information of distinguishing a vehicle, a bicycle, a pedestrian, an obstacle, a structure, and the like. The category is not limited to the information of distinguishing a specific object such as the vehicle, the bicycle, the pedestrian, the obstacle, or the structure described above, and may be, for example, information of distinguishing a dynamic object from a static object. The recognition portion 204 distinguishes and recognizes a dynamic object (for example, an obstacle such as another traffic participant) that is present around the movable body 100 and moves and a static object (for example, an obstacle such as a structure) that does not move on the basis of a camera image captured by the camera 180. Further, the recognition portion 204 may also distinguish and recognize an object (hereinafter, referred to as a "semi-dynamic object") which is a dynamic object but is stopping (remains at the current position) at present. The semi-dynamic object is not limited to a dynamic object (another traffic participant such as a vehicle, a bicycle, a pedestrian (person), or the like) that remains at the current position but may include an object that can be easily moved, for example, such as a desk, a table, or a chair and an object that cannot be easily moved, for example, such as a vending machine. The recognition of the object in the recognition portion 204 may be performed, for example, by a process such as pattern matching using a pattern of an object that is set in advance for recognizing a vehicle, a bicycle, a pedestrian, a fixed object (including an obstacle and a structure), and the like. The recognition of the object in the recognition portion 204 may be performed, for example, by using an AI (Artificial Intelligence) technique such as machine learning. More specifically, for example, when an image is input, the recognition portion 204 inputs a camera image captured by the camera 180 to a learned model that is learned to output information of the presence, the position, the category, and the like of the object and thereby extracts a feature amount of the presence, the position, the category, and the like of the object captured in the camera image, and thereby, the recognition may be performed.

When a detection device (sensor) such as a radar device or a LIDAR is provided on the movable body 100, the recognition portion 204 may recognize the situation around the movable body 100 by using the detection result of the radar device, the LIDAR, or the like in addition to or instead of the camera image.

The recognition portion 204 outputs information (hereinafter, referred to as "object recognition information") relating to each object, in which information representing the presence and the category of the recognized object (a dynamic object, including a semi-dynamic object and a static object) and the state of the object such as the position, the movement speed, and the acceleration is associated with information representing the certainty (that is, a reliability degree) of the recognized object, to each of the self-position estimation portion 206 and the information process portion 212.

The self-position estimation portion 206 estimates the current position (self-position) of the movable body 100. The self-position estimation portion 206 estimates the self-position of the movable body 100, for example, on the basis of the camera image acquired by the acquisition portion 202. At this time, the self-position estimation portion 206 extracts a feature point of the static object from the camera image. More specifically, for example, when a camera image is input, the self-position estimation portion 206 may extract a feature point by using a learned model learned to output an edge of an object captured in the camera image as a point group. This learned model may be stored in the storage portion 220 in advance, or may be acquired from an external device via the communication portion 190 mounted on the movable body 100. The self-position estimation portion 206 may extract the feature point, for example, by using a method of a Visual SLAM (Simultaneous Localization and Mapping) which is a technique of understanding the self-position in three dimensions from the camera image. The extraction method of the feature point on the camera image is not limited to the example described above, and another known method may be used.

The self-position estimation portion 206 estimates a road (movement path) on which the movable body 100 travels based on the extracted feature point, and estimates the self-position of the movable body 100 on the road. The self-position estimation portion 206 may estimate the self-position on the road by comparing the feature point obtained from the camera image with the feature point included in the map information 224. In this case, the self-position estimation portion 206 may estimate the self-position of the movable body 100 by acquiring position information of the movable body 100 by a GPS (Global Positioning System) device (not shown) incorporated in the movable body 100 or the like or by communicating with a communication device that is present within a predetermined distance via the communication portion 190 by a wireless communication method using a short-range wireless communication standard such as the Bluetooth (registered trademark) or the like and thereby acquiring position information of the communication device.

For example, when a static object captured in a camera image is hidden behind a dynamic object or a semi-dynamic object, that is, when a feature point of the static object is hidden by the dynamic object or the semi-dynamic object, it is also conceivable that the self-position estimation portion 206 cannot extract the feature point of the static object that can be originally extracted. In this case, it is conceivable that the self-position estimation portion 206 extracts a false feature point from the region of the dynamic object or the semi-dynamic object and cannot correctly estimate the self-position of the movable body 100. Therefore, the self-position estimation portion 206 may exclude the region of the dynamic object or the semi-dynamic object captured in the camera image from the region in the camera image from which the feature point is extracted on the basis of object recognition information that is output by the recognition portion 204, and estimate the self-position of the movable body 100 on the basis of the feature point extracted from the region in the camera image that is not excluded. As a method in which the self-position estimation portion 206 excludes the region of the dynamic object or the semi-dynamic object in the camera image, for example, a method is conceivable in which the region of the dynamic object or the semi-dynamic object in the camera image is filled with black paint or the like and is thereby masked; however, the method is not limited. The self-position estimation portion 206 may output information (hereinafter, referred to as "recognition exclusion region information") representing a region in the camera image where extraction of the feature point is excluded, or a camera image with which this recognition exclusion region information is associated, to the information process portion 212.

The self-position estimation portion 206 outputs information (hereinafter, referred to as "self-position information") representing an estimation result of the self-position of the movable body 100 to each of the trajectory generation portion 208, the movement control portion 210, and the information process portion 212.

The self-position information is an example of an "estimation result of a self-position".

The trajectory generation portion 208 generates a target trajectory on which the movable body 100 will travel in the future, that is, a travel route to a destination, on the basis of the situation around the movable body 100 recognized by the recognition portion 204 and the self-position (self-position information) of the movable body 100 estimated by the self-position estimation portion 206. The trajectory generation portion 208 generates a travel route (target trajectory) in which the movable body 100 can smoothly move to a target point, for example, in accordance with an operation control (for example, a follow control, a lead control, a parallel travel control, a retreat control, and an emergency control) corresponding to the movement mode commanded by the user.

For example, when the movement mode of the movable body 100 is the follow mode of moving and following the user, the trajectory generation portion 208 generates a target trajectory that follows the user at a position within a range of a predetermined distance from the user and follows the user such that the rear (the rear may be a diagonal rear of the user so as to be visually recognizable from the user) of the user is a target point. For example, when the movement mode of the movable body 100 is the lead mode of moving and leading the user toward a destination, the trajectory generation portion 208 generates a target trajectory that leads the user so that a position within a range of a predetermined distance from the user and at the front (the front may be a diagonal front of the user) of the user is a target point. For example, when the movement mode of the movable body 100 is the parallel travel mode of moving beside the user, the trajectory generation portion 208 generates a target trajectory of traveling parallel to the user so that a position within a range of a predetermined distance from the user and at the side (the side may be a diagonal front or rear of the user) of the user is a target point. For example, when the movement mode of the movable body 100 is the standby mode of retreating (standing by) to a position designated by the user, the trajectory generation portion 208 generates a target trajectory in which the designated position (retreat position) is a target point. For example, when the movement mode of the movable body 100 is the emergency mode, the trajectory generation portion 208 generates a target trajectory for autonomously moving for asking for help to a nearby person or a nearby facility. The operation control corresponding to the type of these movement modes is performed, for example, on the basis of information stored in the control information 222 or the like.

The movement control portion 210 performs a movement control of the movable body 100 so that the movable body 100 moves at a position corresponding to the movement mode set by the user on the basis of the self-position (self-position information) of the movable body 100 estimated by the self-position estimation portion 206. More specifically, the movement control portion 210 controls the motor (the first motor 122, the second motor 132), the brake device 136, and the steering device 138, for example, so that the movable body 100 travels along the target trajectory generated by the trajectory generation portion 208. At this time, when the movable body 100 travels along the target trajectory generated by the trajectory generation portion 208, the movement control portion 210 controls the movable body 100 so that the movable body 100 does not come into contact with a surrounding object and so that the distance between the user and the movable body 100 in accordance with the movement mode is within the range of the predetermined distance on the basis of a recognition result of the object by the recognition portion 204. The range of the predetermined distance is a range of a distance between the shortest distance and the longest distance that are set in advance. The shortest distance and the longest distance may be, for example, a variable distance depending on the type of the movement mode, the surrounding situation (the shape of the movement path, the degree of crowds), and the like, or may be a fixed distance.

The movement control portion 210 (which may include the trajectory generation portion 208) is an example of a "movement control portion".

The information process portion 212 manages, for example, information acquired from the terminal device 2, the management device 10, and the information provision device 20. The information process portion 212 transmits information to the terminal device 2, the management device 10, or the information provision device 20, outputs information (for example, the control information 222, the map information 224, and feature information of a user or a specific object) received from each device or the like to each component of the control apparatus 200, or stores the information in the storage portion 220, for example, on the basis of information received by the operation portion (not shown).

The information process portion 212 performs a process that performs a process of registering feature information of a user who uses the movable body 100, authentication of the user, and the like. For example, when the feature information of the user is registered, the information process portion 212 generates feature information relating to a face, a body shape (body build), a hair color, a skin color, a clothing color, and the like from a face image, a whole body image, and the like of the user captured by the camera 180 before the user starts the use of the movable body 100. The information process portion 212 may generate feature information relating to a posture and a motion (walking motion) of the user. The information process portion 212 may acquire voice data or an image of the palm of the hand of the user and generate feature information relating to a fingerprint, a vein, or a voice. The information process portion 212 may generate information relating to the motion of the movable body 100 corresponding to the gesture of the user and register the generated information in the storage portion 220. When performing user authentication, the information process portion 212 generates feature information from an image in which the user is captured or a voice acquired from a microphone, refers to the feature information stored in a storage portion 220 in advance on the basis of the generated feature information, and permits the use of the movable body 100 by the user when matching feature information (feature information having a similarity degree equal to or more than a threshold value) is present. When the matching feature information is not present in the storage portion 220, the information process portion 212 does not permit the use and causes an information output portion (not shown) to output an error message or a message that prompts registration of the feature information. The information output portion (not shown) is, for example, an example of a notification portion for performing notification of predetermined information to the surroundings of the movable body 100. The information output portion includes, for example, a display section and a sound output section. The display section is, for example, a liquid crystal display (LCD), an organic EL (electroluminescence) display, or the like. The display section may be integrally formed with an operation portion (not shown) as a touch panel. The display section may include a light emission portion constituted of a light emission element such as a LED (Light Emitting Diode) that emits light of a predetermined color. The sound output section is, for example, a speaker or the like. The sound output section outputs (generates) a sound corresponding to the operation of the movable body 100 or a sound corresponding to the display (an image or the like) by the display section.

The information process portion 212 extracts a camera image that satisfies a predetermined condition from the camera images acquired from the camera 180 by the acquisition portion 202, associates the extracted camera image with information of a position (imaging position) where the camera image is captured, and transmits the camera image to the information provision device 20. The predetermined condition (hereinafter, referred to as an "extraction condition") is a condition for extracting a camera image useful for updating the map information 224. The camera image useful for updating the map information 224 is, for example, a camera image in which a movable object such as a semi-dynamic object captured in the current movement (leading (guiding) or following of the user to the destination) in the movable body 100 is captured, or a camera image in which a semi-dynamic object captured in the camera image captured in the previous movement (leading (guiding) or following of the user to the destination) is not captured in the camera image captured in the current movement or is captured at a position within the camera image that is different from the previous position (a static object is still captured at an identical position), that is, a camera image in which it is possible to confirm that the semi-dynamic object has moved or the like. Therefore, the extraction condition includes information of a position (imaging position) at which the camera image is captured. The extraction condition is indicated, for example, in the control information 222 and the map information 224.

The information process portion 212 sets the extraction conditions indicated in the control information 222 and the map information 224, and extracts a camera image that satisfies the set extraction condition. The camera image that satisfies the extraction condition is a camera image in which an object which is a movable object such as a semi-dynamic object but whose position needs to be indicated by updating the map information 224 is captured. The camera image that satisfies the extraction condition is a camera image in which a semi-dynamic object of a specific category is captured, or a camera image in which a specific region (a range (hereinafter, simply referred to as a "range") within the map information 224) is captured (in other words, captured from a specific position (imaging position)). Therefore, the information process portion 212 extracts a camera image that satisfies the extraction condition on the basis of the object recognition information output by the recognition portion 204 and the self-position information output by the self-position estimation portion 206. More specifically, the information process portion 212 determines a semi-dynamic object, for example, such as a desk, a table, a chair, or a vending machine, which is assumed to be moved but is continuously present at an identical position at the present time and therefore needs to be indicated in the map information 224 similarly to a static object (for example, an obstacle such as a structure), from the objects recognized by the recognition portion 204, on the basis of the category (information of the reliability degree may be included) of the object recognized by the recognition portion 204 included in the object recognition information, and extracts a camera image in which the semi-dynamic object is captured. The semi-dynamic object may be, for example, a sign or an object (for example, a partition plate or the like) representing that construction is in progress. The camera image that satisfies the extraction condition is a camera image captured in a region (range) or a position (imaging position) where the number of semi-dynamic objects or the ratio of shadows is large. The camera image that satisfies the extraction condition is, for example, a camera image in which a position where a large number of desks, tables, or chairs are arranged or a region (range) in which it is assumed that a dynamic object such as a person remains at a position such as a front of a vending machine or a front of a door of an elevator and a semi-dynamic object is hidden by the remaining dynamic object is captured. The camera image that satisfies the extraction condition is, for example, a camera image in which a region (range) of a static object or a semi-dynamic object arranged at a position that becomes a shadow area by sunlight is captured. For example, when the self-position estimation portion 206 estimates the self-position of the movable body 100, the possibility that these regions (ranges) are excluded (masked) from the region in the camera image from which the feature point is extracted is high, but if these regions are not excluded, it is necessary to indicate the position of a static object or a semi-dynamic object from which the feature point is extracted in the map information 224 so that the feature point can be extracted. These areas (ranges) and positions (imaging positions) may be indicated in the current map information 224 as a region (range) and a position (imaging position) from which the camera image is extracted (hereinafter, referred to as an "extraction position"). Accordingly, the camera image that satisfies the extraction condition can be referred to as a camera image captured at an extraction position indicated in the current map information 224. In this case, the information process portion 212 determines whether the self-position information represents the extraction position indicated in the map information 224 or the extraction position is included in the camera image on the basis of the position (information of the reliability degree may be included) of the object included in the object recognition information, and extracts the camera image. The information process portion 212 may store, for example, in the storage portion 220, a region (range) or a position (imaging position) in the map information 224, for example, in which a camera image in which a large number of semi-dynamic objects are captured in the previous movement is captured, and may extract the camera image captured in the stored region (range) or at the stored position (imaging position) in the map information 224 in the current movement.

The information process portion 212 stores the extracted camera image as image data 226 in the storage portion 220. The information process portion 212 transmits the image data 226 stored in the storage portion 220 to the information provision device 20 by the communication portion 190. The information process portion 212 transmits image data 226 in which the extracted camera images are collected, to the information provision device 20, for example, at a predetermined timing such as the timing when the current movement (leading (guiding) or following of the user to the destination) is ended. For example, when the extracted camera image is stored as the image data 226 in the storage portion 220, in other words, at each timing when the camera image that satisfies the extraction condition is extracted, the information process portion 212 may transmit the image data 226 to the information provision device 20.

The extraction condition is an example of a "predetermined condition". The camera image that satisfies the extraction condition and the image data 226 are an example of a "first image". The semi-dynamic object which is assumed to be moved but is continuously present at an identical position at the present time and therefore needs to be indicated in the map information 224 similarly to the static object is an example of a "first category object". The region (range) or the position (imaging position) where the number of semi-dynamic objects or the ratio of shadows is large, and the extraction position are an example of a "specific region". The dynamic object is an example of a "second category object".

Thereby, for example, a creator of the map information 224 can determine a semi-dynamic object to be indicated in the map information 224 from the image data 226 transmitted to the information provision device 20 by the movable body 100, and update the map information 224. Further, the information process portion 212 does not store all the camera images captured during the travel of the movable body 100 as the image data 226 in the storage portion 220 and does not transmit the image data 226 to the information provision device 20, but stores a camera image that satisfies the extraction condition as the image data 220 in the storage portion 220 and transmits the image data 226 to the information provision device 20. In other words, a camera image useful for updating the map information 224 is extracted and is transmitted to the information provision device 20. Therefore, the load of determining the semi-dynamic object to be indicated in the map information 224 in the creator of the map information 224 can be reduced, and it is possible to further efficiently perform the update of the map information 224. The update of the map information 224 may be performed, for example, by using a learned model that is learned to discriminate among a static object, a dynamic object, and a semi-dynamic object.

### [Operation of information process portion]

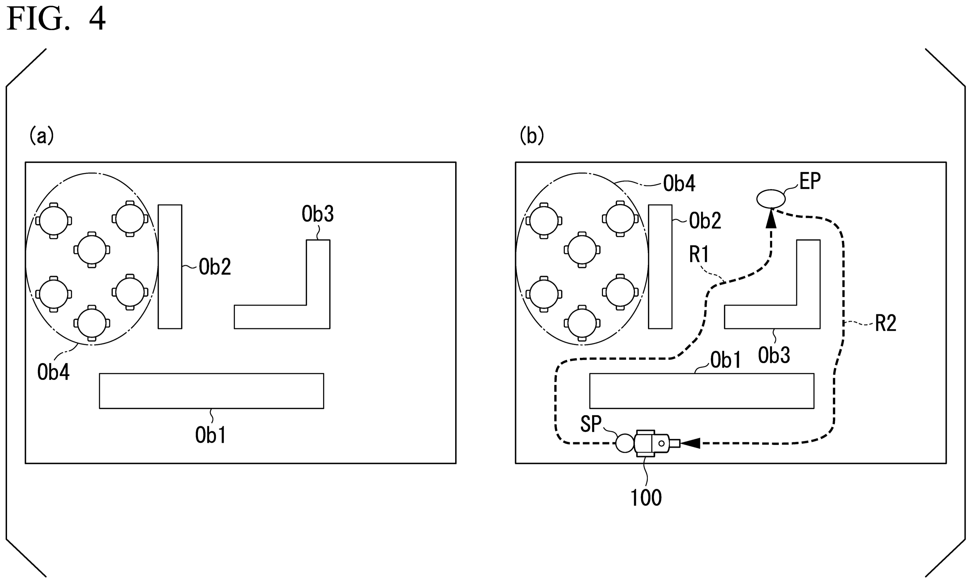

Here, an example of the case where the information process portion 212 extracts a camera image that satisfies the extraction condition will be described. FIG. 4 is a view showing an example of map information 224 representing a region in which the movable body 100 moves and a movement route of the movable body 100 according to the embodiment.

In (a) of FIG. 4, an example of the map information 224 (floor map) of a facility in which, for example, the movable body 100 is operated, and the movable body 100 guides the user to the destination by leading (guiding) the user is schematically shown. The floor map shown in (a) of FIG. 4 is an example of the current map information 224. In the map information 224 shown in (a) of FIG. 4, for example, each of an object Ob1 to an object Ob4 and the position of each object are shown. Each of the object Ob1 to the object Ob3 is, for example, a static object such as a wall (structure) in a facility, and the object Ob4 is, for example, a region in which a large number of semi-dynamic objects such as a desk, a table, and a chair are arranged. In the map information 224 shown in (a) of FIG. 4, an extraction condition (extraction position) is set for the object Ob4.

In (b) of FIG. 4, an example of a movement route along which the movable body 100 moves for guiding a user to a destination is schematically shown. In the example shown in (b) of FIG. 4, a movement route R of the case where the movable body 100 guides the user by leading (guiding) the user from a guide start position SP to a guide end position EP is shown. More specifically, in (b) of FIG. 4, an example of the case where the movable body 100 guides the user to the guide end position EP while traveling on the movement route R1, and returns to the guide start position SP again by traveling on a movement route R2 is shown.

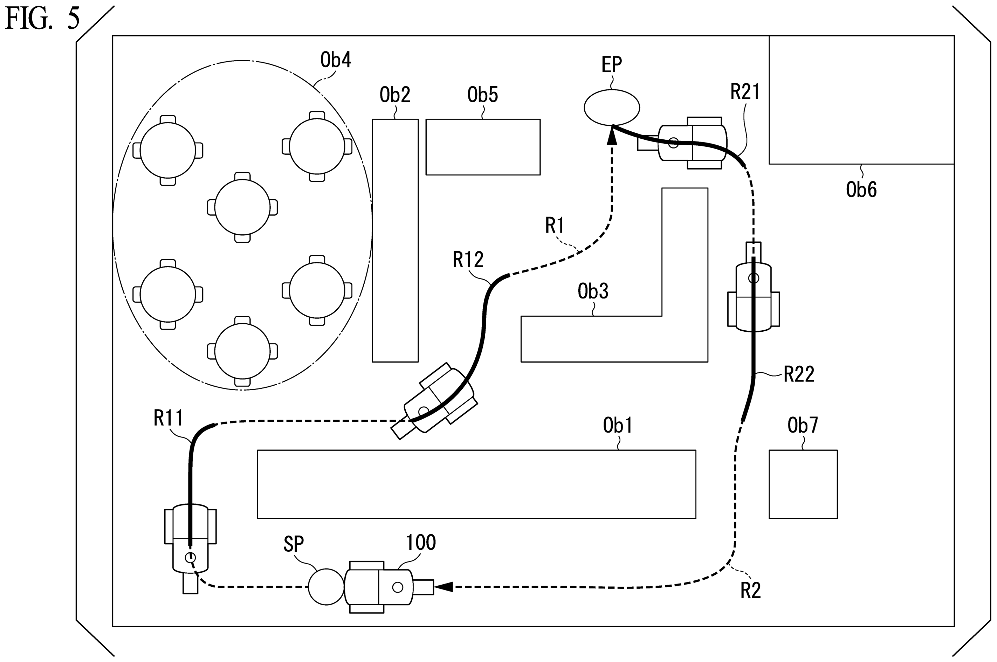

Here, the case where the movable body 100 actually travels while guiding the user is considered. FIG. 5 is a view showing an example of extracting a camera image in the control apparatus 200 (information process portion 212) of the movable body 100 according to the embodiment. In FIG. 5, a camera image that satisfies the set extraction condition is extracted when the movable body 100 travels on the movement route R shown in (b) of FIG. 4. Here, it is assumed that an extraction condition of extracting each of a camera image in which the semi-dynamic object recognized by the recognition portion 204 is captured and a camera image in which the region (extraction position) of the object Ob4 in the map information 224 is captured is set in the information process portion 212. In the following description, it is assumed that the recognition portion 204 recognizes each object captured in the camera image and outputs object recognition information to each of the self-position estimation portion 206 and the information process portion 212. It is assumed that the self-position estimation portion 206 outputs self-position information representing the self-position estimated based on the object recognition information output by the recognition portion 204 to each of the trajectory generation portion 208, the movement control portion 210, and the information process portion 212. It is assumed that, thereby, the trajectory generation portion 208 generates a travel route (target trajectory), the movement control portion 210 performs the movement control, and thereby, the movable body 100 travels.

When the movable body 100 starts leading (guiding) of the user, the movable body 100 travels along the movement route R1 from the current guide start position SP. Then, when the self-position of the movable body 100 becomes a position of a start point of a movement route R11 in which a camera image in which a region of the object Ob4 set as the extraction condition is included within an angle of view can be captured, the information process portion 212 extracts camera images acquired by the acquisition portion 202 during traveling of the movable body 100 in a zone of the movement route R11. The information process portion 212 stores each of the extracted camera images in the storage portion 220 as the image data 226.

Then, when the movable body 100 continues traveling along the movement route R1, and the self-position of the movable body 100 becomes a position of a start point of a movement route R12, and in the case where the recognition portion 204 recognizes an object Ob5 captured in the camera image as a semi-dynamic object, the object recognition information output by the recognition portion 204 includes information relating to the recognized object Ob5. The object Ob5 is, for example, a vending machine that is newly installed within the range of the map information 224 in the facility where the movable body 100 is operated, and the object recognition information indicates that the category of the object Ob5 is a vending machine. Thereby, the information process portion 212 starts extraction of the camera image acquired by the acquisition portion 202, and extracts camera images until the object recognition information does not include the information relating to the object Ob5. In this way, the information process portion 212 extracts the camera images acquired by the acquisition portion 202 during traveling of the movable body 100 in a zone of the movement route R12. The information process portion 212 adds each of the extracted camera images to the image data 226 stored in the storage portion 220.

Then, the movable body 100 continues traveling along the movement route R1, and when the self-position becomes the position of the guide end position EP, the movable body 100 ends the leading (guiding) of the user. At this time, the information process portion 212 transmits the image data 226 stored in the storage portion 220 to the information provision device 20. The information process portion 212 may not transmit the image data 226 stored in the storage portion 220 to the information provision device 20 at the guide end position EP.

Then, since the movable body 100 ends leading (guiding) of the user, the movable body 100 travels along the movement route R2. At this time, that is, when the self-position of the movable body 100 is a position of a start point of a movement route R21, in the case where the recognition portion 204 recognizes an object Ob6 captured in the camera image as a semi-dynamic object, the object recognition information output by the recognition portion 204 includes information relating to the recognized object Ob6. The object Ob6 is, for example, a site (off-limits area) of construction that is performed within the range of the map information 224 in the facility where the movable body 100 is operated, and the object recognition information indicates that the category of the object Ob6 is construction. Thereby, the information process portion 212 starts extraction of the camera image acquired by the acquisition portion 202, and extracts camera images until the object recognition information does not include the information relating to the object Ob6. In this way, the information process portion 212 extracts the camera images acquired by the acquisition portion 202 during traveling of the movable body 100 in a zone of the movement route R21. The information process portion 212 stores each of the extracted camera images in the storage portion 220 as the image data 226. Here, when the image data 226 stored in the storage portion 220 is not transmitted to the information provision device 20 at the position of the guide end position EP, the information process portion 212 adds each of the extracted camera images to the image data 226 stored in the storage portion 220.

Then, when the movable body 100 continues traveling along the movement route R2, and the self-position of the movable body 100 becomes a position of a start point of a movement route R22, and in the case where the recognition portion 204 recognizes an object Ob7 captured in the camera image as a semi-dynamic object, the object recognition information output by the recognition portion 204 includes information relating to the recognized object Ob7. The object Ob7 is, for example, an information counter that is newly installed within the range of the map information 224 in the facility where the movable body 100 is operated, and the object recognition information indicates that the category of the object Ob7 is an information counter. Thereby, the information process portion 212 starts extraction of the camera image acquired by the acquisition portion 202, and extracts camera images until the object recognition information does not include the information relating to the object Ob7. In this way, the information process portion 212 extracts the camera images acquired by the acquisition portion 202 during traveling of the movable body 100 in a zone of the movement route R22. The information process portion 212 adds each of the extracted camera images to the image data 226 stored in the storage portion 220. Here, when the object Ob7 is, for example, a person such as another customer visiting the facility where the movable body 100 is operated, the object recognition information indicates that the category of the object Ob7 is a person. In this case, the information process portion 212 may start the extraction of the camera image acquired by the acquisition portion 202 or may not start the extraction. That is, the information process portion 212 may not store the camera images in which the person is captured as the object Ob7, which are acquired by the acquisition portion 202 during traveling of the movable body 100 in the zone of the movement route R22, in the storage portion 220 as the image data 226.

Then, when the movable body 100 continues traveling along the movement route R2, and the self-position becomes the position of the guide start position SP, the movable body 100 ends all the steps relating to the current leading (guiding) of the user. At this time, the information process portion 212 transmits the image data 226 stored in the storage portion 220 to the information provision device 20.

Thereby, for example, the creator of the map information 224 can determine a semi-dynamic object to be indicated in the map information 224 from the image data 226 transmitted to the information provision device 20 by the movable body 100 at the position of the guide end position EP or the position of the guide start position SP, and update the map information 224. Further, since the information process portion 212 does not transmit all the camera images captured during traveling of the movable body 100 but transmits a camera image that satisfies the extraction condition and is useful for the update of the map information 224 to the information provision device 20 as the image data 226, the load of determining the semi-dynamic object to be indicated in the map information 224 in the creator of the map information 224 can be reduced, and it is possible to further efficiently perform the update of the map information 224. In the example shown in FIG. 5, the map information 224 can be updated by determining the camera images which are extracted during traveling in the zone of the movement route R11 and in which the region (for example, the region in which a large number of desks, tables, chairs, or the like are arranged) of the object Ob4 is captured, the camera images which are extracted during traveling in the zone of the movement route R12 and in which the object Ob5 (the vending machine) is captured, the camera images which are extracted during traveling in the zone of the movement route R21 and in which the object Ob6 (the site of construction) is captured, and the camera images which are extracted during traveling in the zone of the movement route R22 and in which the object Ob7 (the information counter or the person) is captured.

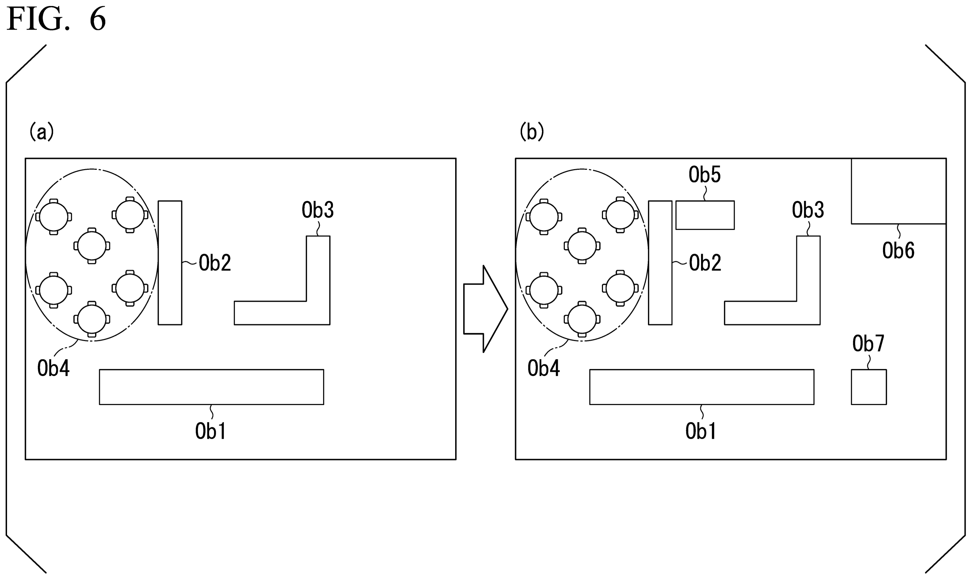

Here, an example of the case where the map information 224 is updated based on the image data 226 will be described. FIG. 6 is a view showing an example of map information 224 updated based on a camera image (image data 226) extracted in the control apparatus 200 (information process portion 212) of the movable body 100 according to the embodiment.

In (a) of FIG. 6, an example of the map information 224 which is the same as the floor map shown in (a) of FIG. 4 is schematically shown. In (b) of FIG. 6, an example of the map information 224 (hereinafter, referred to as "map information 224u"), for example, that is determined and updated by the creator of the map information 224 from the image data 226 extracted by the information process portion 212 and transmitted to the information provision device 20 in the example shown in FIG. 5 is schematically shown. The example shown in (b) of FIG. 6 is an example of the map information 224u in the case where the creator of the map information 224 determines that the object Ob7 captured in the camera image acquired by the acquisition portion 202 during traveling of the movable body 100 in the zone (refer to FIG. 5) of the movement route R22 is the information counter and is a semi-dynamic object to be indicated in the map information 224 and update the map information. As shown in (b) of FIG. 6, in the map information 224u, the object Ob5 to the object Ob7 are indicated in addition to the object Ob1 to the object Ob4 that has already been indicated in the floor map of the facility in which the movable body 100 guides the user to the destination by leading (guiding) the user. When the information process portion 212 receives the map information 224u transmitted by the information provision device 20, the information process portion 212 stores the map information 224u in the storage portion 220. In other words, the information process portion 212 overwrites the map information 224u on the map information 224 stored in the storage portion 220 and updates the map information. Thereby, when the movable body 100 performs the next movement (leading (guiding) or following of the user to the destination), the movable body 100 can travel by using the latest map information 224u stored in the storage portion 220. More specifically, the self-position estimation portion 206 can estimate the self-position of the movable body 100 by using the latest map information 224u stored in the storage portion 220. Then, the trajectory generation portion 208 can generate a travel route (target trajectory), and the movement control portion 210 can perform a movement control. Thereby, the control apparatus 200 included in the movable body 100 can cause the movable body 100 to travel further safely and smoothly.

### [Flow of process that extracts camera image]

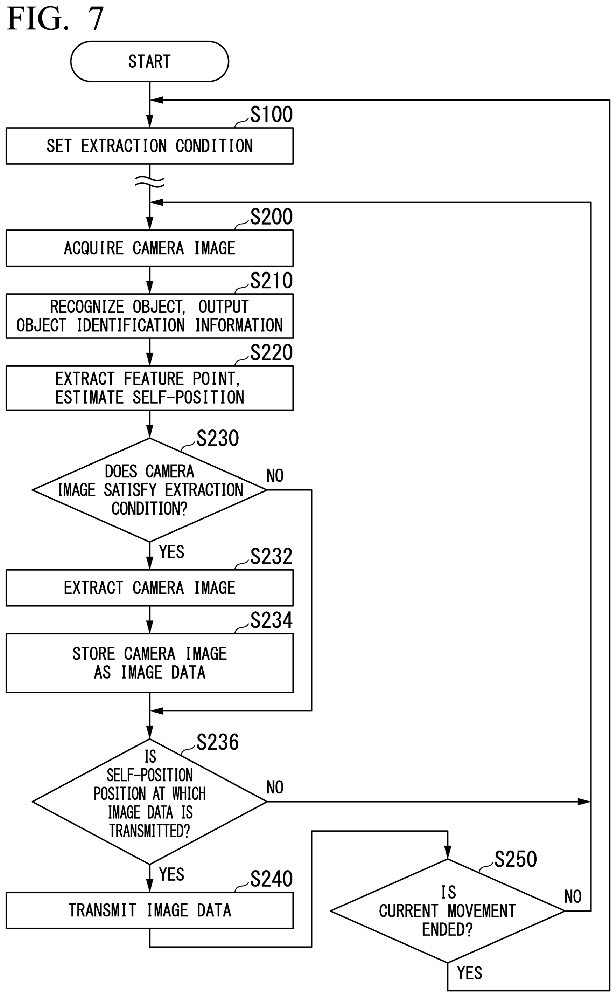

FIG. 7 is a flowchart showing an example of a flow of a process (extraction process) of extracting a camera image performed in the control apparatus 200 of the movable body 100 according to the embodiment. The process of the present flowchart is repeatedly performed in the control apparatus 200 (more specifically, the acquisition portion 202, the recognition portion 204, the self-position estimation portion 206, and the information process portion 212) at a predetermined time interval when the camera 180 captures an image of the vicinity (at least the front) of the movable body 100. In the following description, it is assumed that the extraction condition is a condition of extracting each of a camera image in which a semi-dynamic object recognized by the recognition portion 204 is captured and a camera image in which a region (extraction position) of the object Ob4 in the map information 224 is captured. In the following description, for ease of explanation, descriptions of a control relating to the travel of the movable body 100 in the control apparatus 200 (more specifically, the trajectory generation portion 208 and the movement control portion 210) will be omitted.

For example, when the movable body 100 is started, or before the movement (leading (guiding) or following of the user to the destination) in the movable body 100 is started, the control apparatus 200 sets the extraction condition in the information process portion 212 (Step S100).

Then, in the movable body 100, when the movement (leading (guiding) or following of the user to the destination) in the movable body 100 is started, the camera 180 captures an image of the front of the movable body 100, and the acquisition portion 202 acquires a camera image captured by the camera 180 (Step S200).

The recognition portion 204 recognizes a situation (here, a situation (an object that is present at the front) of the front) around the movable body 100 on the basis of the camera image acquired by the acquisition portion 202. At this time, the recognition portion 204 distinguishes a dynamic object, a semi-dynamic object, and a static object that are present in front of the movable body 100 from each other and recognizes each object. The recognition portion 204 outputs object recognition information relating to each recognized object to each of the self-position estimation portion 206 and the information process portion 212 (Step S210).

The self-position estimation portion 206 extracts a feature point of the static object from the camera image and estimates the self-position of the movable body 100 on the basis of the extracted feature point (Step S220). The self-position estimation portion 206 outputs self-position information representing the estimated self-position of the movable body 100 to each of the trajectory generation portion 208, the movement control portion 210, and the information process portion 212. Thereby, the travel of the movable body 100 is controlled by the trajectory generation portion 208 and the movement control portion 210.

The information process portion 212 determines whether or not the camera image acquired by the acquisition portion 202 is a camera image that satisfies the set extraction condition (Step S230). This determination can be performed, for example, by determining whether or not the object captured in the camera image and recognized by the recognition portion 204 is a semi-dynamic object that needs to be indicated in the map information 224 on the basis of the object recognition information. When it is determined in Step S230 that the camera image is a camera image which does not satisfy the extraction condition, the information process portion 212 advances the process to Step S236.

On the other hand, when it is determined in Step S230 that the camera image is a camera image which satisfies the extraction condition, the information process portion 212 extracts the camera image that is determined to satisfy the extraction condition (Step S232). Then, the information process portion 212 stores the extracted camera image as image data 226 in the storage portion 220 (Step S234).

Then, the information process portion 212 determines whether or not the self-position of the movable body 100 is a position at which the image data 226 is transmitted (Step S236). When it is determined in Step S236 that the self-position of the movable body 100 is not the position at which the image data 226 is transmitted, the information process portion 212 causes the process to return to Step S200. Thereby, in the control apparatus 200, the acquisition portion 202 acquires the next camera image captured by the camera 180, and the processes of Step S200 to Step S236 are repeated.

On the other hand, when it is determined in Step S236 that the self-position of the movable body 100 is the position at which the image data 226 is transmitted, the information process portion 212 transmits the image data 226 stored in the storage portion 220 to the information provision device 20 (Step S240).

Then, the information process portion 212 determines whether or not the current movement (leading (guiding) or following of the user to the destination) in the movable body 100 is ended (Step S250). When it is determined in Step S250 that the current movement in the movable body 100 is not ended, the information process portion 212 causes the process to return to Step S200, and the control apparatus 200 causes the acquisition portion 202 to acquire the next camera image captured by the camera 180 and repeats the processes of Step S200 to Step S250.

On the other hand, when it is determined in Step S250 that the current movement in the movable body 100 is ended, the information process portion 212 causes the process to return to Step S100, and the control apparatus 200 ends the extraction process of the camera image associated with the current movement (leading (guiding) or following of the user to the destination) in the movable body 100. At this time, for example, the control apparatus 200 may stop the activation of the movable body 100.

According to such a flow of the extraction process of the camera image, in the control apparatus 200, the information process portion 212 extracts a camera image that satisfies a set predetermined condition (extraction condition) from the camera images acquired by the acquisition portion 202 from the camera 180, stores the extracted camera image in the storage portion 220 as the image data 226, and then transmits the image data 226 to the information provision device 20. Thereby, for example, the creator of the map information 224 can determine, with a small load, a semi-dynamic object to be indicated in the map information 224 from the image data 226 transmitted to the information provision device 20 by the movable body 100, and can further efficiently update the map information 224. Thereby, the control apparatus 200 included in the movable body 100 can cause the movable body 100 to travel further safely and smoothly.

As described above, according to the movable body control apparatus of the embodiment, the recognition portion 204 recognizes an object that is present around the movable body 100, a state of the object such as a position, a movement speed, and an acceleration, a category of the object, and the like on the basis of the camera image captured by the camera 180. In the movable body control apparatus of the embodiment, the self-position estimation portion 206 estimates the self-position of the movable body 100 on the basis of the camera image. In the movable body control apparatus of the embodiment, the information process portion 212 determines a semi-dynamic object which is captured in the camera image captured during traveling of the movable body 100 and needs to be indicated in the map information 224, and thereby extracts a camera image in which a semi-dynamic object that satisfies a set predetermined condition (extraction condition) is captured. The movable body control apparatus of the embodiment transmits the extracted camera image (image data 226) to the information provision device 20 that constitutes the movable body control system including the movable body of the embodiment. Thereby, in the movable body control system of the embodiment, for example, the creator of the map information 224 can determine, with a small load, a semi-dynamic object to be indicated in the map information 224 from the image data 226 transmitted to the information provision device 20 by the movable body control apparatus of the embodiment, and can further efficiently update the map information 224 to be stored in the storage portion 220 of the movable body of the embodiment. Thereby, the movable body control apparatus of the embodiment can cause the movable body 100 to travel further safely and smoothly.

The embodiment described above can be expressed as follows. A movable body control apparatus configured to include:
a storage medium that stores computer-readable instructions; and
a processor coupled to the storage medium,
wherein the processor executes the computer-readable instructions to perform:
   acquiring an image in which a situation around a movable body is captured;
   recognizing an object which is present around the movable body based on the image;
   estimating a self-position of the movable body based on the image;
   performing a movement control of the movable body based on an estimation result of the self-position;
   extracting, from the image, a first image which satisfies a predetermined condition of updating map information used for estimation of a self-position when the movable body moves; and
   storing the first image in a storage portion,
   wherein the predetermined condition is a condition of extracting the image in which at least a first category object whose position is indicated in the map information is included, and
   when extracting the first image,
      the first category object is determined from the recognized object that is present around the movable body, and
      the first image in which the determined first category object is captured is extracted.

The embodiment is described using the case where the information process portion 212 determines a semi-dynamic object that is captured in a camera image captured during traveling of the movable body 100 and needs to be indicated in the map information 224 on the basis of the recognition result (object recognition information of the object recognized by the recognition portion 204) of the object by the recognition portion 204. However, the recognition portion 204 recognizes a dynamic object, a semi-dynamic object, and a static object that are captured in the camera image. That is, the recognition portion 204 also recognizes, for example, an object that is not required to be indicated in the map information 224 such as a vehicle, a bicycle, or a pedestrian (person). On the other hand, the information process portion 212 determines a semi-dynamic object whose position needs to be indicated by updating the map information 224, and extracts a camera image in which the semi-dynamic object is captured. Therefore, the information process portion 212 may be configured to include, for example, a recognition portion (not shown) that recognizes only a semi-dynamic object captured in a camera image (that is, a recognition portion that recognizes an object and is dedicated to recognize a semi-dynamic object), determine a semi-dynamic object that needs to be indicated in the map information 224 on the basis of the object recognition information of the semi-dynamic object recognized by the recognition portion (not shown) in place of the object recognition information output by the recognition portion 204, and extract a camera image in which the semi-dynamic object is captured. In this case, the recognition portion (not shown) is an example of a "recognition portion". The process (the extraction process of the camera image) of the information process portion 212 in this case may also be equivalent to the extraction process of the camera image of the information process portion 212 described in the embodiment.

The embodiment is described using the case where the information process portion 212 stores the image data 226 in the storage portion 220 and then transmits the image data 226 to the information provision device 20 by the communication portion 190, and, for example, the creator of the map information 224 updates the map information 224. In other words, the case where the creator of the map information 224 operates the information provision device 20 and updates the map information 224 is described. However, as described above, the update of the map information 224 can be performed, for example, by using a learned model that is learned to discriminate among a static object, a dynamic object, and a semi-dynamic object. In this case, a configuration may be employed in which the update of the map information 224 is performed by the information process portion 212. The function and the process of the information process portion 212 in this case may be those in which a function and a process of updating the map information 224 are added to the function and the process of the information process portion 212 described in the embodiment.

Although modes for implementing the present invention have been described using the embodiments, the present invention is not limited to such embodiments at all, and various modifications and replacements can be made without departing from the scope of the present invention.

## Claims

1. A movable body control apparatus comprising:
an acquisition portion that acquires an image in which a situation around a movable body is captured;
a recognition portion that recognizes an object which is present around the movable body based on the image;
a self-position estimation portion that estimates a self-position of the movable body based on the image;
a movement control portion that performs a movement control of the movable body based on an estimation result of the self-position; and
an information process portion that extracts, from the image, a first image which satisfies a predetermined condition of updating map information used for estimation of a self-position when the movable body moves, and stores the first image in a storage portion,
wherein the predetermined condition is a condition of extracting the image in which at least a first category object whose position is indicated in the map information is included, and
the information process portion determines the first category object from the recognized object that is present around the movable body and extracts the first image in which the determined first category object is captured.

2. The movable body control apparatus according to claim 1,
wherein the first category object is an object that is movable but is continuously present at an identical position at present.

3. The movable body control apparatus according to claim 1 or 2,
wherein the predetermined condition is a condition of extracting the image in which at least a specific region whose position is indicated in the map information is captured, and
the information process portion extracts, from the image, the first image in which the specific region is captured.

4. The movable body control apparatus according to claim 3,
wherein the specific region is a region indicated in the map information.

5. The movable body control apparatus according to claim 4,
wherein the specific region is a region in which a number of a second category object which is a dynamic object captured in the image is large.

6. A movable body control system comprising:
a movable body; and
an information provision device,
wherein the movable body comprises:
an acquisition portion that acquires an image in which a situation around the movable body is captured;
a recognition portion that recognizes an object which is present around the movable body based on the image;
a self-position estimation portion that estimates a self-position of the movable body based on the image;
a movement control portion that performs a movement control of the movable body based on an estimation result of the self-position; and
an information process portion that extracts, from the image, a first image which satisfies a predetermined condition of updating map information used for estimation of a self-position when the movable body moves, and stores the first image in a storage portion,
wherein the predetermined condition is a condition of extracting the image in which at least a first category object whose position is indicated in the map information is included,
the information process portion
determines the first category object from the recognized object that is present around the movable body, extracts the first image in which the determined first category object is captured, and
transmits the first image stored in the storage portion to the information provision device by a communication portion, and
the information provision device
provides at least the map information to the movable body and
updates the map information based on the first image transmitted by the movable body.

7. A movable body control method including,
by way of a computer:
acquiring an image in which a situation around a movable body is captured;
recognizing an object which is present around the movable body based on the image;
estimating a self-position of the movable body based on the image;
performing a movement control of the movable body based on an estimation result of the self-position;
extracting, from the image, a first image which satisfies a predetermined condition of updating map information used for estimation of a self-position when the movable body moves; and
storing the first image in a storage portion,
wherein the predetermined condition is a condition of extracting the image in which at least a first category object whose position is indicated in the map information is included, and
when extracting the first image,
the first category object is determined from the recognized object that is present around the movable body, and
the first image in which the determined first category object is captured is extracted.

8. A storage medium storing a program that causes a computer to:
acquire an image in which a situation around a movable body is captured;
recognize an object which is present around the movable body based on the image;
estimate a self-position of the movable body based on the image;
perform a movement control of the movable body based on an estimation result of the self-position;
extract, from the image, a first image which satisfies a predetermined condition of updating map information used for estimation of a self-position when the movable body moves; and
store the first image in a storage portion,
wherein the predetermined condition is a condition of extracting the image in which at least a first category object whose position is indicated in the map information is included, and
when extracting the first image,
the program causes the computer to determine the first category object from the recognized object that is present around the movable body and
to extract the first image in which the determined first category object is captured.
